# EUROPEAN PATENT APPLICATION

(11) **EP 1 575 257 A1**
(43) Date of publication of application: **14.09.2005**
(21) Application number: 05101751.5
(22) Date of filing: 07.03.2005
(51) Int. Cl.: H04N 1/00

(54) **A selection switch and display**

(30) Priority: 10.03.2004 KR 2004016046
(71) Applicant: SAMSUNG ELECTRONICS CO., LTD., Gyeonggi-Do 442-742 (KR)
(72) Inventor: Song, Su-kyoung, Gyeongsangbuk-do (KR)
(74) Representative: Geary, Stuart Lloyd

(57) **Abstract**

A mode selection switch of a photographing device comprising a mode display unit for displaying the first operation mode with a highest usage frequency at one end, displaying the second operation mode with a second highest usage frequency at the other end, and displaying the third operation mode with a third highest usage frequency at the center of both ends, and a mode selection unit for indicating the first, second, and third operation modes arranged in order on the mode display unit. A user inputs a mode selection command to the mode selection unit to select one of the first, second, and third operation modes. Therefore, the user can easily select a desired operation mode without even looking at the mode selection switch and thus, the user's convenience is substantially improved.

## Description

The present invention relates, in general, to a mode selection switch of a photographing device. More particularly, the present invention relates to a mode selection switch of a photographing device for selecting an operational mode of the photographing device.

Known digital still cameras (DSC) convert images that enter through a lens into a digital signal, and store the digital signal on a recording medium such as a memory card.

Unfortunately, however, recording media used in the DSC is of a small capacity and as such the DSC is primarily used for capturing still images. Although the DSC is capable of capturing moving images for a very limited period of time, it is not capable of capturing them for an extended period of time. In addition, the DSC does not contain any device for recording or playing back sound as the moving image is played.

Therefore, DSC's are generally not the appropriate choice for capturing, storing and playing back moving images. To address these problems, a recording/play back device which is capable of capturing and playing back the image with sound of a captured subject stored on a recording medium (for example, a magnetic tape), such as a camcorder (i.e., digital video camcorder (DVC)), is primarily used.

Since the DVC uses magnetic tape as the recording medium, the DVC is capable of capturing moving images for an extended period of time. However, as the picture quality of the DVC is usually poorer than that of the DSC, many people use the DVC for capturing moving images only.

Consumers, therefore, usually purchase both a DVC and a DSC to record moving and still images, respectively. This, however, is expensive. In addition, carrying both of these products together and using each depending on the image the user wishes to capture (either moving or still) is inconvenient for most consumers.

As an attempt to address the problems discussed above, a combination DVC/DSC has been developed. The user is therefore given the option to either choose the DVC or DSC for capturing images. As the DVC and the DSC are operated separately, the user changes the mode of operation of the photographing device (or camera apparatus) from the DVC mode to the DSC mode or vice versa, whenever is appropriate.

When using such a combination DVC/DSC, the user cannot capture moving and still images without changing the mode of operation frequently. Therefore, a mode selection switch for changing the operation mode is usually located on the case of the combination DVC/DSC so that the user can easily operate it. One such mode selection switch is a multi-step switch. The operation mode selection switch is also used for playing back recorded images stored in the combination DVC/DSC combination device (photographing device) or for selecting a power off mode to turn off the power of the device.

If the photographing device is operated in more than three different modes, the user must verify that the correct mode is being used from the modes displayed on the mode selection switch. Many users find this very inconvenient. This is especially the case when a user wants to capture an important scene by using the DSC after capturing a moving image using the DVC. In this situation, the user has to take his eyes off the viewfinder or LCD of the photographing device to alter the mode selection switch. Even if the user takes his or her eyes off the viewfinder or LCD momentarily, the subject of whose image is to be captured may change, thus may be out of focus when captured. Moreover, the DVC/DSC combination unit has more functions than other photographing devices and some of these functions are frequently used and some functions are not.

Therefore, there is a need to arrange the more frequently used functions of the photographing device to a position where the user can easily find and operate them. This will aid the user to operate the photographing device having more complicated functions.

Accordingly, it is an object of the present invention to provide a mode selection switch for use in a photographing device having at least three favorite operation modes of a user so that the user can select a desired operation mode.

The present invention relates to a selection switch for a camera apparatus having a plurality of operating modes, comprising switching means movable between positions, wherein each position corresponds to one of the operating modes.

A selection switch in this aspect is characterised in that the order of the modes is such that the modes corresponding to the two extreme positions are set on the basis that they have the highest probability of usage.

Preferably, this selection switch will have the features of claim 2.

The present invention also relates to a selection switch for a camera apparatus having a plurality of operating modes comprising, switching means movable between positions, wherein each position corresponds to one of the operating modes and control means responsive to user input means.

A selection switch according to this aspect is characterised in that the control means is configured to order the modes such that the modes corresponding to the two extreme positions are selected in response to operation of the user input means.

The present invention also relates to a display device for use with a camera apparatus having a plurality of operating modes, the display device being operable to display the operating modes comprising, control means configured to associate each operating mode with the corresponding displayed operating mode.

A display device according to this aspect is characterised by the control means being configured to arrange the order of display of the operating modes in accordance with the probabilities of usage of said operating modes

An embodiment of the present invention will now be described, by way of example only, and with reference to the accompanying Figures, in which:
Figure 1 is a schematic block diagram of a photographing device according to an embodiment of the present invention;
Figure 2A and Figure 2B respectively illustrate a mode selection switch of a photographing device according to a first embodiment of the present invention;
Figure 3 illustrates a mode selection switch of a photographing device according to a second embodiment of the present invention;
Figure 4A and Figure 4B respectively illustrate a menu screen and a menu dial used for a mode selection switch of a photographing device according to a third embodiment of the present invention; and
Figure 5 is a flowchart provided for the explanation of a mode selection method of a photographing device according to a fourth embodiment of the present invention.

In the drawings, the same or similar elements are denoted by the same reference numerals even though they are depicted in different drawings. In the following description, a detailed description of known functions and configurations have been omitted for conciseness and clarity.

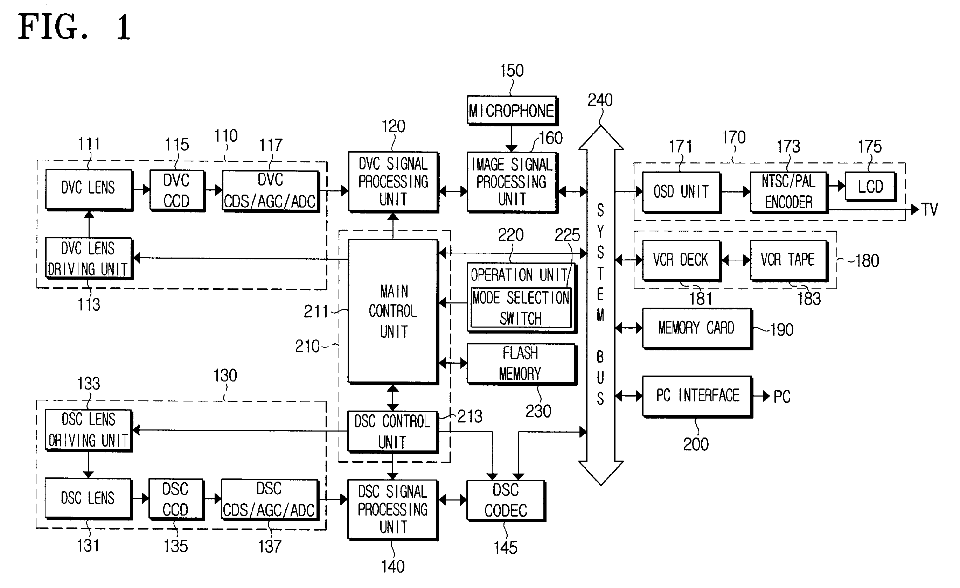

As shown in Figure 1, the photographing device includes a DVC photographing block 110, a DVC signal processing unit 120, a DSC photographing block 130, a DSC signal processing unit 140, DSC coder/decoder (CODEC) 145, a microphone 150, a memory card 190, PC interface 200, a control block 210, an operation unit 220, flash memory 230, and a system bus 240.

The DVC photographing block 110 converts a light signal that passes through the lens into a signal, and performs a designated signal process on the signal. The DVC photographing block 110 photographs both moving and still images. The picture quality of the still image captured by the DVC photographing block 110, however, is of a much poorer quality than that of the still image captured by the DSC photographing block 130. Therefore, the DVC photographing block 110 is used primarily for capturing moving images.

The DVC photographing block 110 includes a DVC lens 111, a DVC lens driving unit 113, a DVC Charge Coupled Device (CCD) 115, and a DVC correlated double sampler/auto gain controller/analog-to-digital converter (CDS/AGC/ADC) 117. The DVC lens driving unit 113 is controlled by the control block 210, and operates the DVC lens 111. The DVC lens driving unit 113 can drive the DVC lens to zoom in and zoom out, as well as automatically focus the DVC lens 111 and adjusting the aperture size of the diaphragm (not shown) of the DVC lens 111.

The DVC CCD 115 converts the optical image which passes through the DVC lens 111 into an electrical signal. This signal is output from the DVC CCD 115. The optical image of the subject to be captured is formed on the optical surface of the DVC CCD 115, and the DVC CCD 115 converts the optical image appearing on the photo-sensitive surface into an electrical signal. This signal is output as a one-dimensional electrical signal by scanning the surface in horizontal and vertical directions.

The DVC CDS/AGC/ADC 117 removes electrical noise from the output signal using the CDS, adjusts the gain using the AGC so that the signal level is constant, and converts the signal to a digital signal using the ADC. The DVC signal processing unit 120 performs a designated signal process on the digital signal received from the DVC photographing block 110, and applies the processed signal to an image signal processing unit 160. The DVC signal processing unit 120 separates the signal into a luminance (Y) signal and a chrominance (C) signal. The DVC signal processing unit 120 then assists the DVC CDS/AGC/ADC 117 in gain control, assists the main control unit 211 in focusing, and provides an auto white balance (AWB) function, thereby improving the resolution.

The microphone 150 converts an externally provided audio signal into an electrical signal, and outputs this signal to the image signal processing unit 160. The image signal processing unit 160 feeds the processed image signal from the DVC signal processing unit 120 to a display block 170.

When the image signal processing unit 160 receives a 'photograph command' which the user inputs to the operation unit 220 (usually generated by a "capture button" (not shown)), it converts the signal output from the DVC signal processing unit 120 into a digital video signal, which is then compressed. The image signal processing unit 160 also converts the signal output from the microphone 150 into a digital signal, which is then compressed into a pulse code modulated (PCM) signal. The image signal processing unit 160, under the control of the control block 210, feeds the compressed signals to a VCR block 180 for recording.

If the photographing device is operated in 'VCR play' mode, the image signal processing unit 160 receives the compressed image signals from the VCR block 180 for playing. The image signal processing unit 160 achieves this by decompressing the compressed image signals and applying these decompressed signals to the display block 170.

The DSC photographing block 130 converts a light signal which passes through the lens into an electrical signal and subsequently performs a designated signal process on the converted signal. The DSC photographing block 130 is capable of capturing both moving and still images. The data storage capacity required for storing moving images captured by the DSC photographing block 130 is much larger than that of moving images captured by the DVC photographing block 110. This means that more storage is required to record these moving images in the recording medium. Thus, it is near impossible to capture moving images for an extended period of time. This means that the DSC photographing block 130 is primarily used for capturing still images.

The DSC photographing block 130 includes a DSC lens 131, a DVC lens driving unit 133, a DSC CCD 135, and a DSC CDS/AGC/ADC 137. The DSC lens driving unit 133, which is controlled by the control block 210, operates the DSC lens 131. The DSC lens driving unit 133 allows the DSC lens 131 to zoom in and out, as well as to automatically focus and to adjust the aperture size of a diaphragm (not shown) of the DSC lens 131. The DSC CCD 135 converts a received optical image which passes through the DSC lens 131 into an electrical signal, and outputs this signal.

The DSC CDS/AGC/ADC 137 removes electrical noise from the signal output from the DSC CCD 135 by using the CDS. Also the DSC CDS/AGC/ADC 137 adjusts the gain using the AGC so as to keep the signal level constant, and then converts the output signal to a digital signal using the ADC. The DSC signal processing unit 140 performs a designated signal process on the digital signal received from the DSC photographing block 130. The DSC signal processing unit 140 separates the signal fed from the DSC photographing block 140 into a luminance (Y) signal and a chrominance (C) signal. The DSC signal processing unit 140 assists the DSC CDS/AGC/ADC 137 in gain control, assists the main control unit 211 in focusing, and provides an auto white balance (AWB) function which improves the resolution of the captured image.

The DSC CODEC 145 supplies the image signal processed by the DSC signal processing unit 140 to the display block 170. When the DSC CODEC 145 receives a 'photograph command' that the user inputs to the operation unit 220 (usually generated when the user presses a "capture button" (not shown)), it compresses the output signal from the DSC signal processing unit 140 into a JPEG signal or the like. The DSC CODEC 145, controlled by the control block 210, records the compressed signal in the memory card 190.

Alternatively, if the photographing device is operating in 'memory card playback' mode, the DSC CODEC 145, controlled by the control block 210, receives the compressed image signals from the memory card 190 which are to be played back. The DSC CODEC 145 then decompresses the compressed image signals and feeds them to the display block 170.

The display block 170 displays signals output from the image signal processing unit 160 and the DSC CODEC 145. The display block 170 includes an on screen display (OSD) 171, an National Television System Committee/ phase alternation line (NTSC/PAL) encoder (NTSC/PAL)173 and a liquid crystal display (LCD) 175.

The OSD unit 171 stores OSD characters and graphics user interface (GUI) data, (e.g., a menu screen) used for constructing a GUI. The OSD unit 171, controlled by the control block 210, combines images output from the image signal processing unit 160 and the DSC CODEC 145 with the OSD characters and/or GUI data. The NTSC/PAL encoder 173 converts the image signals output from the OSD unit 171 into either NTSC signals or PAL signals, and feeds these to an external device such as a television. The LCD 175 also displays the images fed from the NTSC/PAL encoder 241.

The VCR block 180 either records image signals output from the image signal processing unit 160 or reads the image signals which have been recorded and feeds them to the image signal processing unit 160. The VCR block 180 includes a VCR deck 181 and a VCR tape 183. The VCR tape 183 is usually a magnetic recording medium capable of recording image signals, and is removable from the VCR deck 181. The VCR deck 181 either records or reads image signals to or from the VCR tape 183 and feeds the signals to the image signal processing unit 160.

The memory card 190 is another recording medium capable of recording image signals fed from the DSC CODEC 145. The memory card 190 is detachable from the photographing device. The PC interface 200 allows the photographing device to interface with an external device, such as a PC or a printer.

The control block 210 controls the general operation of the photographing apparatus, depending on user-input commands provided to the operation unit 220. The control block 210 controls either the DVC photographing block 110 or the DSC photographing block 130 so as to capture images in response to the user input commands. The control block 210 includes a main control unit 211 and a DSC control unit 213.

In operation, the main control unit 211 receives an user input command from the operation block 220, and controls the DVC lens driving unit 113, the DVC signal processing unit 120, the image signal processing unit 160, the OSD unit 171, the VCR deck 181, and the PC interface 200 appropriately. The main control unit 211 also controls the operation of the DSC control unit 312.

The DSC control unit 213, controlled by the main control unit 211, controls operations of the DSC lens driving unit 133, the DSC signal processing unit 140 and the DSC CODEC 145. The flash memory 230 is used to backup important data after power is turned off. The flash memory 230 is also used to backup important data when a system program used in the operation of the apparatus is turned off. An example of such a program is the booting program.

The operation unit 220 is a user interface which receives operation commands from the user. The operation commands are associated with the selection of a plurality of functions as well as for controlling the photographing device. The operation unit 220 includes a mode selection switch 225 with which the user selects the mode of operation of the photographing device.

The mode selection switch 225 will now be described in greater detail below. As the mode selection switch 225 is one of the most frequently used operation buttons in the operation unit 220 it is preferable to locate it at a position where the user can easily operate it. For example, if the user is holding the photographing device with one hand, the mode selection switch 225 is located so that the user can easily operate it with his or her thumb or index finger of that hand.

The photographing device operates in at least four different modes: i) a 'DVC photograph' mode for recording images captured by the DVC photographing block 110; ii) a 'DSC photograph' mode for recording images captured by the DSC photographing block 130; iii) a 'Play' mode for playing or displaying images recorded in the VCR block 180; and iv) an 'OFF' mode for turning off the power to the photographing device. Therefore, the mode selection switch 225 allows the user to choose one of these four operation modes.

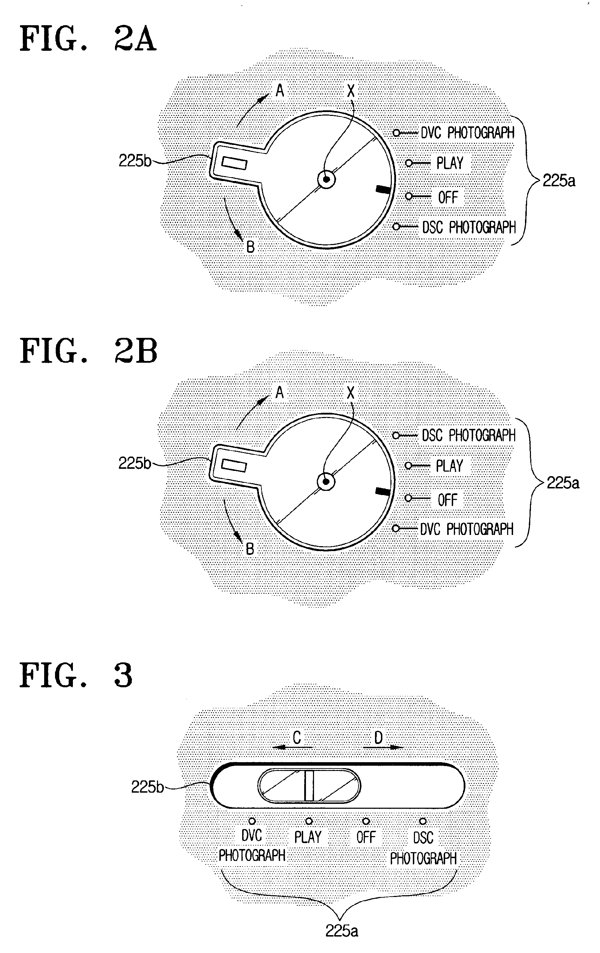

Referring to Figure 2A, the mode selection switch 225 is a rotatory type multi-step switch. The mode selection switch 225 includes a mode display unit 225a and a mode selection unit 225b. The mode display unit 225a displays every operation mode the user can choose.

As described above, the photographing device is operated in one of four different modes: DVC photograph mode, DSC photograph mode, Play mode, and OFF mode. Accordingly, the mode display unit 225a displays the four operation modes. The mode selection unit 225b is operated by the user and rotates in either an 'A' or 'B' direction with respect to the 'X' axis. The user rotates the mode selection unit 225b to select one of the four operation modes. In Figure 2A, the mode selection unit 225b is shown indicating the 'OFF' mode, for example.

The mode selection unit 225b outputs to the main control unit 211 a different mode selection command signal (i.e., the selected operation mode) which is dependent on the rotational angle of the mode selection unit 225a.. The main control unit 211 ensures that the photographing device is operated in the operation mode corresponding to the mode selection command signal from the mode selection unit 225b. When the user rotates the mode selection unit 225b and stops at one of the operation modes displayed on the mode display unit 225a, the photographing device starts to operate in the operation mode chosen by the user.

The arrangement of the four operation modes displayed on the mode display unit 225a is determined according to the frequency of usage by the user or the user's preference. The most selected operation mode is located at a more convenient position for the user to select. Normally, the 'DVC photograph' mode and the 'DSC photograph' mode are the most frequently used operation modes out of the four and thus, the frequency of selection of these two modes is higher than the other two operation modes. Therefore, the 'DVC photograph' mode and the 'DSC photograph' mode should be arranged at more convenient positions for the user to select.

As shown in Figure 2A, the mode selection switch 225 is a rotating multi-step switch, the top and bottom end of the mode display unit 225a are located so that the user can easily make the selection. To make the mode selection unit 225b indicate the option located on the top of the mode display unit 225a, the user only needs to push the mode selection unit 225b in the 'B' direction. When the user pushes the mode selection unit 225b in the 'B' direction, the mode selection unit 225b rotates until it hits the top of the mode display unit 225a. The mode selection unit 225b then stops.

To make the mode selection unit 225b indicate the option located on bottom of the mode display unit 225a, the user only needs to push the mode selection unit 225b in the 'A' direction. When the user pushes the mode selection unit in the 'A' direction, the mode selection unit 225b keeps rotating until it hits the bottom end of the mode display unit 225a. The mode selection unit 225b then stops.

As described above, once the mode selection unit 225b hits the top or the bottom of the mode display unit 225a it stops. Thus the most frequently used operation modes are located at the top and the bottom of the mode display unit 225a for the user's convenience.

To select an operation mode that is located towards the centre of the mode display unit 225a (such as, the 'Play' mode and the 'OFF' mode in Figure 2), the user has to see the location of the desired operation mode. Moreover, to select the operation mode the user needs be more careful rotating the switch. The user cannot simply push the mode selection unit 225b to either the top or bottom extreme but will need to push it more gently. Therefore, selecting the operation modes located towards the central portion of the mode display unit 225a is much harder and inconvenient than selecting the operation modes located at the top or the bottom of the mode display unit 225a.

These are the reasons why the 'DVC photograph' mode and the 'DSC photograph' mode which are selected with a higher frequency are located at the top and bottom extremities of the mode display section 225a as shown in Figure 2A. If the locations of the 'DVC photograph' mode and the 'DSC photograph' mode were exchanged with each other, as shown in Figure 2B, the user would generally not notice the difference. Therefore, as shown in Figure 2B, the 'DVC photograph' mode can equally be located at the bottom of the mode display unit 225a and the 'DSC photograph' mode at the top of the mode display unit 225a.

As shown in Figure 3, the mode selection switch is a linear multi-step switch. The user moves the mode selection unit 225b linearly in either the 'C' direction or the 'D' direction. The linear multi-step switch indicates one of the four operation modes arranged on the mode display unit 225a. For example, the mode selection unit 225b in Figure 3 indicates the 'Play' mode.

In the case of the linear multi-step mode selection switch 225, the far left end and the far right end of the mode display unit 225a are the most convenient positions for the user to select. To make the mode selection unit 225b indicate the operation located at the far left end of the mode display unit 225a, the user only needs to push the mode selection unit 225b as far as it can go in the 'C' direction. Likewise, to make mode selection unit 225b indicate the operation located at the far right end of the mode display unit 225a, the user only needs to push the mode selection unit 225b as far as it can go in the 'D' direction. When pushed in either the 'C' or 'D' direction, the mode selection unit 225b keeps moving until it hits the far left end or far right end of the mode display unit 225a. The mode selection unit 225b then stops and slides no more.

Thus, the 'DVC photograph' mode and the 'DSC photograph' mode, which are selected with a higher frequency, are located at the far left end and the far right end of the mode display section 225a, as shown in Figure 3. Also, the location of the 'DVC photograph' mode and the 'DSC photograph' mode can be exchanged with each other.

In the third embodiment of the present invention which will be described hereinafter, the user-selectable operation modes are displayed on the menu screen.

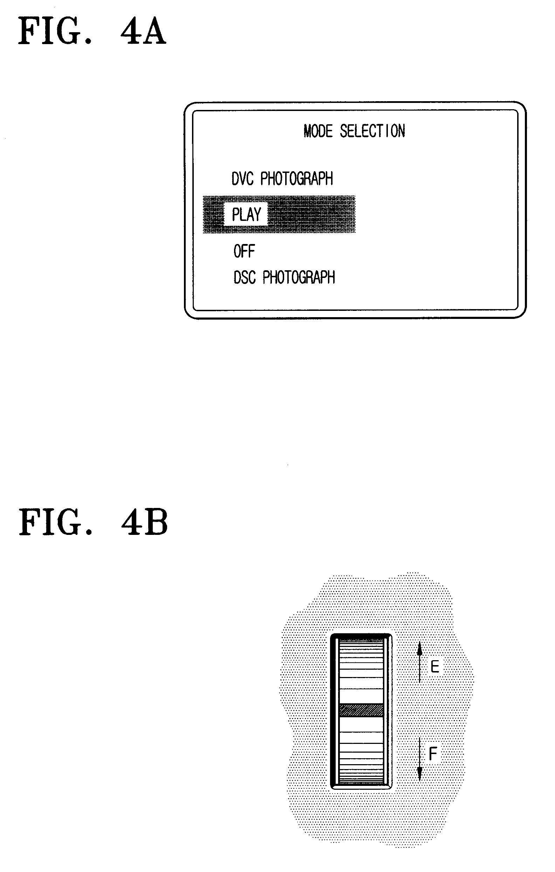

Figure 4A illustrates a mode selection menu screen provided by the OSD unit 171. The operation modes displayed on the menu screen are 'DVC photograph' menu, 'Play' mode, 'OFF' menu, and 'DSC photograph' mode, and a cursor indicates which one is currently selected. Therefore, in operation, the user moves the cursor to select the desired operation mode. After the desired operation mode is selected, the photographing device starts to operate in the selected operation mode.

Figure 4B illustrates a menu dial that is used for moving the cursor to a specific user selected menu. When the user pushes the menu dial up (in the 'E' direction), the cursor on the menu screen moves up (or in the 'E' direction) also. Alternatively, when the user pushes the menu dial down (in the 'F' direction), the cursor on the menu screen moves down accordingly. After the user moves the cursor to the desired operation mode, the user presses the menu dial and the photographing device operates in the selected operation mode.

As with the mode display unit 225a, the most frequently or preferred menus will be located at the top or bottom of the menu screen, because these are the positions the user can most easily locate with the cursor. When the user rolls the menu dial in the 'E' or 'F' direction, the cursor moves to the top or bottom of the menu screen and stops.

For the reasons discussed above, the 'DVC photograph' mode and the 'DSC photograph' mode which have the highest frequency of selection are located at the top and bottom of the menu screen, respectively, as shown in Figure 4A. The positions of the 'DVC photograph' mode and the 'DSC photograph' mode can be exchanged with each other. Also, if the menu items on the menu screen are arranged in the horizontal direction, as opposed to the vertical direction shown in Figure 4A, the 'DVC photograph' mode and the 'DSC photograph' mode which have the highest frequency of selection are located at the far left and the far right of the menu screen, respectively,

For purposes of this discussion, it has been assumed that the 'DVC photograph' mode and the 'DSC photograph' mode have the highest frequency of selection. This, of course, may not necessarily be the case. Therefore, if the 'DVC photograph' mode and the 'Play' mode have highest frequency of selection, these modes can be arranged at the top/bottom or at the far left /right of the display.

In addition, the four operation modes of the photographing device, described in the embodiments of the present invention are illustrative only. Therefore, if desired, other operation modes can be added. The total number of the operation modes does not need to be limited to 4. In most cases, three operation modes are sufficient to operate the photographing device.

In the described embodiments, the control block 210 included the main control unit 211 and the DSC control unit 213 and the functions of each control unit was different from one another. This is illustrative only and the embodiments of the present invention need not be limited to this arrangement. Therefore, one control block 210 can be designed to control the general operation of the photographing device.

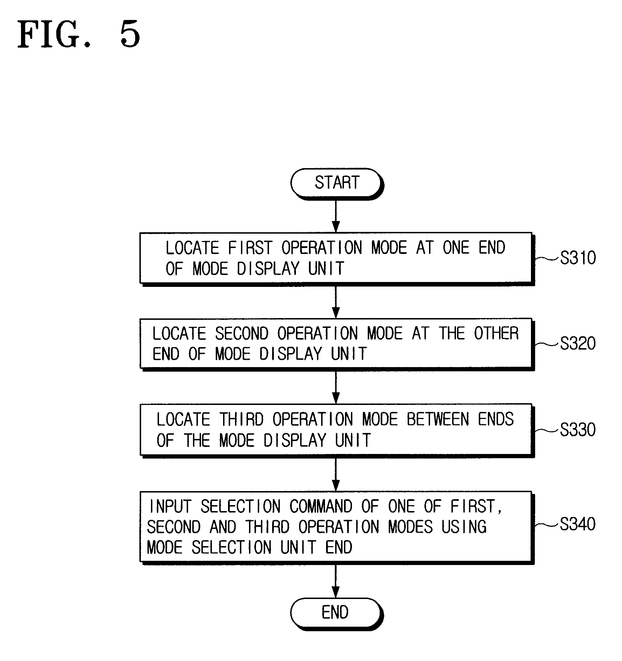

A mode selection method of the photographing device will now be described in greater detail below with reference to Figure 5. Figure 5 is a flowchart provided for the explanation of a mode selection method of a photographing device according to a fourth embodiment of the present invention.

In the description of the fourth embodiment as follows, the operation mode with the highest usage frequency will be referred to as a first operation mode, an operation mode with the second highest usage frequency will be referred to as a second operation mode, and an operation mode with the third highest usage frequency will be referred to as a third operation mode.

Referring to Figure 5, the first operation mode is located at one end of the mode display unit 225a (step S310), the second operation mode is located at the other end of the mode display unit 225a (step S320), and the third operation mode is located between the ends of the mode display unit 225a (step S330), respectively.

Next, a mode selection command is input which selects one of first, second or third operation modes, using the mode selection unit 225b (step S340).

In operation S340, the mode selection unit 225b is used to indicate the first, second or third operation modes in sequence by a rotary, or a linear movement.

The mode selection unit 225b located so that it can be operated by the user's thumb or index finger of the hand holding the photographing device.

Additionally, the first operation mode, the second operation mode, and the third operation mode can be displayed as a menu screen in the operations from S310 to S330. In this case, the user may input a mode selection command by moving a cursor to one of the first, second, and third operation modes arranged in order on the menu screen.

In conclusion, according to the mode selection switch of the photographing device for selecting one of at least three operation modes, the user's preference or the selected frequencies of the modes are considered to arrange the operation mode. Therefore, the user can more easily select the modes more frequently used, without having to look at the mode selection switch. Therefore, the user's convenience is substantially increased.

## Claims

1. A selection switch (225) for a camera apparatus having a plurality of operating modes (225a), comprising switching means (225b) movable between positions, wherein each position corresponds to one of the operating modes (225a), **characterised in that** the order of the modes is such that the modes corresponding to the two extreme positions are set on the basis that they have the highest probability of usage.

2. A selection switch (225) according to claim 1, comprising, an active display element having control means configured to: control the display element so that the operating mode (225a) corresponding to said position is displayed on the display element; determine the selected mode of operation on the basis of said position of the switching means (225b); and change the operating modes located at the extreme positions.

3. A selection switch (225) for a camera apparatus having a plurality of operating modes (225a) comprising, switching means (225b) movable between positions, wherein each position corresponds to one of the operating modes (225a) and control means (210) responsive to user input means, **characterised in that** the control means (210) is configured to order the modes (225a) such that the modes (225a) corresponding to the two extreme positions are selected in response to operation of the user input means.

4. A display device for use with a camera apparatus having a plurality of operating modes (225a), the display device being operable to display the operating modes (225a) comprising, control means (210) configured to associate each operating mode (225a) with the corresponding displayed operating mode, **characterised by** the control means (210) being configured to arrange the order of display of the operating modes (225a) in accordance with the probabilities of usage of said operating modes.

5. A mode selection switch of a photographing device for selecting one of first, second, and third operation modes, the mode selection switch comprising:
a mode display unit for displaying the first operation mode with a highest usage frequency at one end, displaying the second operation mode with a second highest usage frequency at the other end, and displaying the third operation mode with a third highest usage frequency between both ends; and
a mode selection unit for indicating the first, second, and third operation modes arranged in order on the mode display unit, and to which a user inputs a mode selection command to select one of the first, second, and third operation modes.

6. The mode selection switch according to claim 5, wherein the mode selection unit indicates, through a rotation of the mode selection switch, one of the first, second, and third operation modes in sequence.

7. The mode selection switch according to claim 5, wherein the mode selection unit indicates, through a linear motion of the mode selection switch, one of the first, second, and third operation modes in sequence.

8. The mode selection switch according to claim 5, wherein if the user holds the photographing device with one hand, the mode selection switch is operable by the user's thumb and index finger of the hand holding the photographing device.

9. The mode selection switch according to claim 5, wherein the first operation mode comprises a first photograph mode for recording photographed images through a first photographing block in a recording medium mounted in the photographing device, and the second operation mode comprises a second photograph mode for recording photographed images through a second photographing block in the recording medium mounted in the photographing device.

10. The mode selection switch according to claim 9, wherein the first photographing block comprises a digital video camcorder (DVC) photographing block for photographing images including moving images; and the second photographing block comprises a digital still camera (DSC) photographing block for photographing images including still images.

11. The mode selection switch according to claim 5, wherein the third operation mode comprises one of a Play mode for playing or reproducing the images in the recording medium on a display block mounted in the photographing device, or a power off mode for turning off power to the photographing device.

12. The mode selection switch according to claim 5, wherein the first operation mode comprises a photograph mode for recording in a recording medium images that are photographed by using the photographing block mounted in the photographing device, and the second operation mode comprises a play mode for displaying the images that are recorded in the recording medium on a display block mounted in the photographing device.

13. The mode selection switch according to claim 12, wherein the third operation mode comprises a power off mode for turning off power of the photographing device.

14. The mode selection switch according to claim 5, wherein the mode display unit displays a menu screen comprising the first operation mode, the second operation mode, and the third operation mode; and the mode selection unit allows a user to input a mode selection command by moving a cursor to one of the first, second, and third operation modes arranged in order on the menu screen.

15. The mode selection switch according to claim 14, wherein the mode selection unit indicates, through a linear motion of the mode selection switch, one of the first, second, and third operation modes in sequence.

16. A method of operating a photographing device, comprising:
displaying a first operation mode with a highest usage frequency at one end of a display unit;
displaying a second operation mode with a second highest usage frequency at the other end of the display unit;
displaying a third operation mode with a third highest usage frequency between the ends of the display unit; and
selecting one of first, second, and third operation modes, using a mode selection unit to input a mode selection command.

17. The method according to claim 16, wherein the step of selecting one of first, second, and third operation modes comprises:
rotating the mode selection unit to indicate the first, second, and third operation modes in sequence.

18. The method according to claim 16, wherein the step of selecting one of first, second, and third operation modes comprises:
moving linearly the mode selection unit to indicate the first, second, and third operation modes in sequence.

19. The method according to claim 16, further comprising:
operating the mode selection unit by the user's thumb and index finger of the hand holding the photographing device.

20. The method according to claim 16, wherein the first operation mode comprises a first photograph mode for recording photographed images through a first photographing block in a recording medium mounted in the photographing device, and the second operation mode comprises a second photograph mode for recording photographed images through a second photographing block in the recording medium mounted in the photographing device.

21. The method according to claim 16, wherein the third operation mode comprises one of a Play mode for playing or reproducing the images in the recording medium on a display block mounted in the photographing device, or a power off mode for turning off power to the photographing device.

22. The method according to claim 16, wherein the first operation mode comprises a photograph mode for recording in a recording medium images that are photographed by using the photographing block mounted in the photographing device, the second operation mode comprises a play mode for displaying the images that are recorded in the recording medium on a display block mounted in the photographing device, and the third operation mode comprises a power off mode for turning off power of the photographing device.

23. The method according to claim 16, further comprising:
displaying a menu screen on the display unit comprising the first operation mode, the second operation mode, and the third operation mode; and
allowing the user to input a mode selection command by moving a cursor to one of the first, second, and third operation modes arranged in order on the menu screen.

24. The method according to claim 23, wherein the step of allowing the user to input a mode selection command comprises:
moving in a linear motion a mode selection switch to select one of the first, second, and third operation modes in sequence.
